# EUROPEAN PATENT APPLICATION

(11) **EP 4 079 970 A1**
(43) Date of publication of application: **26.10.2022**
(21) Application number: 20903978.3
(22) Date of filing: 22.12.2020
(51) Int. Cl.: E02D 27/42, F03D 13/20

(54) **CONCRETE FOUNDATION FOR A WIND TURBINE TOWER AND METHOD FOR INSTALLING SAME**

(30) Priority: 19.12.2019 ES 201931140
(71) Applicant: Structural Design Engineering, SLU, 28037 Madrid (ES)
(72) Inventor: OCAÑA MORÁN, Antonio José, 28037 Madrid (ES)
(74) Representative: Linage González, Rafael
(86) International application number: PCT/ES2020/070812
(87) International publication number: WO 2021/123489

(57) **Abstract**

A precast concrete foundation (100; 200) for a wind tower (140; 240), comprising a slab (110, 120; 210, 220a, 220b), a pedestal (130; 230) and ribs (150; 250). The slab comprises a first piece (110; 210) and a second piece (120; 220a, 220b), the first slab piece (110; 210) and the pedestal (130; 230) are integral with each other, the second slab piece (120; 220a, 220b) is an annular piece surrounding the first slab piece (110; 210), the first slab piece (110; 210) and the second slab piece (120; 220a, 220b) are spaced apart from one another, the ribs (150; 250) extend from the pedestal (130; 230) to the second slab piece (120; 220a, 220b), and the ribs (150; 250) are fastened to the second slab piece (120; 220a, 220b) and the pedestal (130; 230) and/or the first slab piece (110; 210).

## Description

### Technical field

The present invention relates to a concrete foundation for a wind tower (wind tower meaning a tower that supports a wind turbine on the top for electricity production) and to a method for its installation.

Therefore, the present invention lies mainly within the construction industry and the renewable or green energy industry, specifically wind energy.

### Background of the invention

Concrete foundations for wind towers are known that consist of a slab placed on the ground; a pedestal in the form of a vertical cylinder placed centrally on the slab, on which the tower will rest, and ribs arranged radially on the slab and adjacent to the pedestal, which act as buttresses for said pedestal.

Solutions in which the slab, pedestal and ribs are cast on-site are commonly used in the industry. There are solutions in the patent literature where the ribs are precast structures, and the slab and pedestal are cast on-site, but these are not often put into practice.

Such foundations therefore require excavating a hole to pour concrete into it, formwork with pre-installed rebar, according to the pre-established design, and pouring large quantities of concrete to obtain large reinforced concrete structures.

The problem with on-site concreting is mainly that it requires long execution times, for different reasons:
- rebar, formwork and concreting of the element on-site;
- formwork removal requires a certain amount of time;
- curing time of the element on-site.

In combined solutions, with precast elements and elements cast on-site, the execution time is necessarily even longer, since another factor comes into play:
- the time it takes for the concrete of the element cast on-site to reach minimum resistance in order to proceed with the joining of the cast on-site and precast elements.

Combined solutions can therefore present a lot of downtime where there is no continuity in the work of production teams.

On the other hand, the strict production deadlines and the complexity of the elements, with large volumes of concrete and high densities of reinforcement, too often indirectly generate execution problems.

In any case, great care and expertise is required to design and build an entire foundation complex capable of meeting the requirements arising from the local conditions of use for each wind tower.

Furthermore, these are fairly large structures, with pedestal diameters of, for example, 5 to 5.5 m, which require a considerable amount of time for concreting.

The concreting for the construction of these foundations cannot be carried out in adverse weather conditions such as intense cold, rain, and so on, and it is also necessary to respect the concrete setting time before placing the towers, which in the end entails long installation times for the towers.

Lastly, in-situ concreting, with the prior arrangement of formwork and rebar, requires the presence of operators and various personnel for long periods of time, in the place destined to receive the foundation and, subsequently, the wind tower.

Document WO 2005/012651 discloses a concrete foundation for a wind tower formed by a single monolithic piece, obtained entirely by pouring concrete on-site.

WO 2008/036934 discloses a concrete foundation for a wind tower in which only part of the foundation elements are precast. Other elements, such as the entire slab, instead require the pouring of considerable volumes of concrete on-site.

Finally, document US 2012/0167499 discloses a foundation that is entirely precast and consisting of at least two precast structural elements, coupled together without play and subsequently fastened to each other.

An entirely precast foundation solves certain problems of the prior art but, being a concrete foundation for a wind tower that requires an extremely large and heavy foundation, it has high demands on transportation. The precast elements that make up the foundation have dimensions and weights that make them very difficult to transport, or else the foundation has to be divided into a large number of precast elements, which requires more trips to be made or more resources to be made available for transport.

### Summary of the invention

The present invention relates to a concrete foundation for a wind tower, entirely precast, comprising a reinforced and/or prestressed concrete slab, a reinforced and/or prestressed concrete pedestal and at least two reinforced and/or prestressed concrete ribs, wherein the slab comprises a first piece and a second piece, wherein the first slab piece and the pedestal are in integral with each other, wherein the second slab piece is an annular piece that surrounds the first slab piece, wherein the first slab piece and the second slab piece are spaced apart from one another, wherein the ribs extend from the pedestal to the second slab piece, and wherein the ribs are fastened, on the one hand, to the second slab piece and, on the other hand, to the pedestal and/or to the first slab piece.

The second slab piece can be a unitary piece or it can be formed by a plurality of adjacent angular sections, circumferentially fastened to each other. The second slab piece can also be divided into a plurality of concentric rings, in which case at least one of said concentric rings will be unitary or will be formed by a plurality of adjacent angular sections, circumferentially fastened to each other. In the latter case, the ribs will be fastened to such unitary concentric ring or formed by a plurality of adjacent angular sections, circumferentially fastened to each other.

The applicant has verified that an intermediate area between the first slab piece and the second slab piece barely works and its elimination reduces the volume of the precast structure without noticeably affecting the performance of the foundation.

### Brief description of the drawings

The characteristics and advantages of the present invention will become clearer from the following detailed description of embodiments thereof, described, by way of nonlimiting example, with reference to the attached drawings, in which:
Figure 1 shows a schematic top plan view of a first embodiment of the foundation according to the present invention;
Figure 2 shows a schematic front elevation view of the foundation of figure 1 in a cross section along line II-II of figure 1;
Figure 3 shows a top plan view of a second embodiment of the foundation according to the present invention;
Figure 4 shows a front elevation view of the foundation of figure 3 in a cross section along line IV-IV of figure 3;
Figure 5 shows a perspective view of a rib of the foundation of figures 3-4; and
Figure 6 shows a perspective view of a cross section of the foundation slab of figures 3-5.

### Description of embodiments

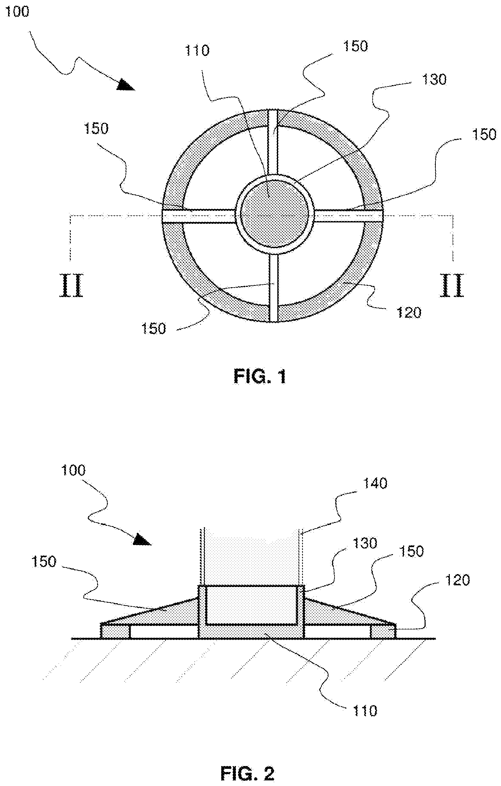

Figures 1 and 2 show a wind tower foundation 100 according to a first embodiment of the present invention. The foundation 100 is entirely precast in reinforced concrete. Alternatively or additionally, the concrete of one or more of the foundation 100 elements could be prestressed.

The foundation 100 comprises a slab 110, 120. The slab 110, 120 is a horizontal element in the form of a reinforced concrete pad that is in contact with the ground.

The foundation 100 also comprises a pedestal 130 that directly supports a shaft 140 of the corresponding tower. In this case, the part of the shaft 140 that rests on the pedestal 130 is made of steel, but it will be understood that it can be made of another material, such as concrete, and that the tower can be made of a single material or have sections of different materials along its length, which is often called a hybrid tower. The pedestal 130 is in the shape of a cylinder, and more specifically a straight circular cylinder, although it will be understood that, in general, the pedestal will have the shape of the tower shaft that it supports.

The slab in turn comprises a first piece 110 and a second piece 120. The first slab piece 110 is integral with the pedestal 130 and has the same horizontal surface, although the horizontal surface of the first slab piece 110 may be greater than that of the pedestal 130. The second slab piece 120 has a horizontal annular shape, specifically a circular crown. The second slab piece 120 is arranged on the ground surrounding the first slab piece 110 at some distance.

The foundation 100 also comprises four ribs 150 which, starting laterally from the cylindrical pedestal 130, extend radially, equidistant from one another, until they rest on the second slab piece 120. The ribs 150 are fastened, on the one hand, to the second slab piece 120 and, on the other hand, to the pedestal 130. For fastening, bars and/or cables are used that, during precasting, can be designed to project from an element, with coinciding cavities that are produced when precasting the matching element of the foundation 100 (not shown to simplify the figures) when installed.

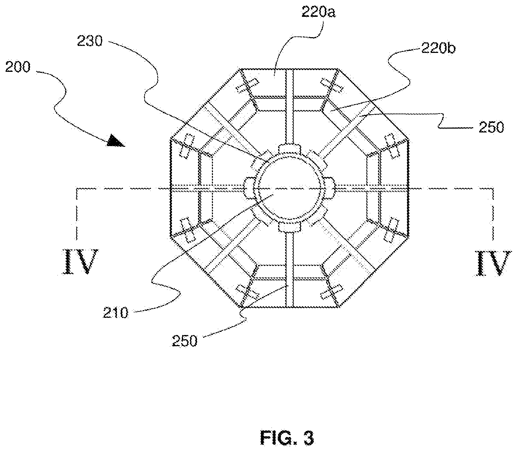

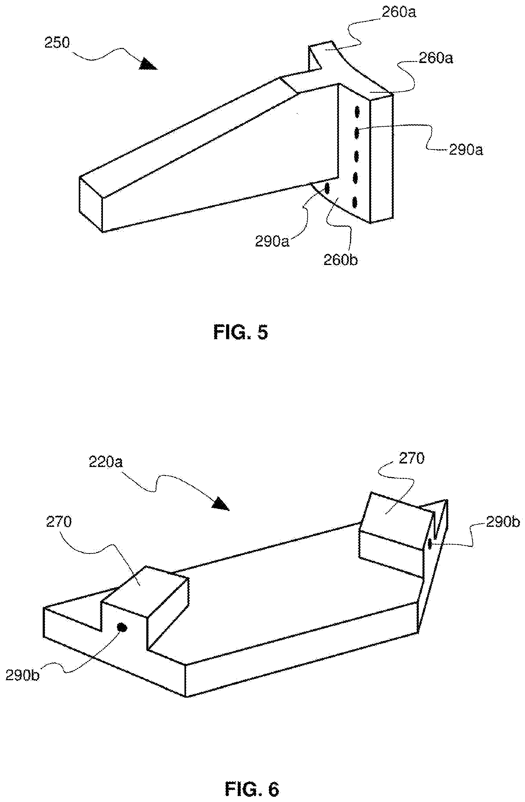

Figures 3, 4, 5 and 6 show a wind tower foundation 200 according to a second embodiment of the present invention. The foundation 200 is entirely precast in reinforced concrete. Alternatively or additionally, the concrete of one or more of the foundation 100 elements could be prestressed.

Similarly to the first embodiment, the foundation 200 comprises a slab 210, 220a, 220b. The slab 210, 220a, 220b is a horizontal element in the form of a reinforced concrete pad that is in contact with the ground.

The foundation 200 also comprises a pedestal 230 that directly supports a shaft 240 of the corresponding tower. In this case, the part of the shaft 240 that rests on the pedestal 230 is made of steel, but it will be understood that it can be made of another material, such as concrete, and that the tower can be made of a single material or have sections of different materials along its length, which is often called a hybrid tower. The pedestal 230 is in the shape of a cylinder, and more specifically a straight circular cylinder, although it will be understood that, in general, the pedestal will have the shape of the tower shaft that it supports.

The slab in turn comprises a first piece 210 and a second piece 220a, 220b. The first slab piece 210 is integral with the pedestal 230 and has the same horizontal surface, although the horizontal surface of the first slab piece 210 may be greater than that of the pedestal 230.

The second slab piece 220a, 220b has an annular shape when viewed from above. In this case, the second slab piece 220a, 220b has an octagonal outer contour and a matching octagonal inner contour. The second slab piece 220a, 220b is arranged on the ground surrounding the first slab piece 210 at some distance. Furthermore, the second slab piece is divided into two concentric rings, in particular an octagonal outer ring 220a and an octagonal inner ring 220b, and said concentric rings are in turn divided into angular sections, in this case in correspondence with each apex, resulting in the second slab piece 220a, 220b actually being made up of 16 sections. The eight adjacent sections of the octagonal outer ring 220a are circumferentially fastened to each other.

This configuration in sections of the second slab piece 220a, 220b is advantageous because it generates straight sections that can be dimensioned according to transport requirements. For example, in the present embodiment, a slab with a minimum width of 20 m, that is, the width of the slab measured from the midpoint of an outer side of the octagonal outer ring 220a to the midpoint of the outer side of the outer octagonal ring 220a that lies diametrically opposite, 16 straight sections are generated of which the largest (the sections of the octagonal outer ring 220a) have maximum dimensions of 8.2 x 2.4 x 0.6 m.

The foundation 200 also comprises eight ribs 250 which, starting laterally from the cylindrical pedestal 230, extend radially, equidistant from one another, until they rest on the second slab piece 220a, 220b.

In the present embodiment, the ribs 250 are T-shaped when viewed from above. That is, each rib 250 comprises a lateral rib 260a on each side, in correspondence with the end which, when installed, is adjacent to the pedestal 230. Furthermore, these ribs 260a extend below the respective rib 250 along a foot 260b which, when installed, rests on the ground. This means that, advantageously, the weight of the rib 250 is not supported by the fastening cables, unlike in the first embodiment. In addition, the overhanging of the rib 250 by means of the foot 260b advantageously makes it possible to use the entire vertical extension of the pedestal-first slab piece 230, 210 assembly to transmit loads between each rib 250 and the pedestal-first slab piece 230, 210 assembly.

The ribs 250 are fastened, on the one hand, to the second slab piece 220a, 220b and, on the other hand, to the pedestal 230 and to the first slab piece 210. Bars and cables 280a, 280b are used for fastening. In the present embodiment, passive bars 280a are used to fasten the ribs 250 to the second slab piece 220a, 220b, and post-tensioned active bars 280b are used to fasten the ribs 250 to the pedestal 230 and to the first slab piece 210. For this, when precasting, passive bars 280a are left projecting from the second slab piece 220a, 220b, and cavities are formed on the ribs 250 coinciding with said passive bars 280a; similarly, when precasting, through holes 290a are formed in the ribs 260a and in the feet 260b of the ribs 250, and matching holes are formed in the pedestal 230 and in the first slab piece 210 (through holes in the pedestal), through which, when installed, live bars 280b are arranged which secure the ribs 250 to the pedestal 230 and to the first slab piece 210.

Furthermore, the sections of the octagonal outer ring 220a are circumferentially fastened to each other by passive bars. For this, when precasting, the upper surface of each of the octagonal outer ring sections 220a is formed with a projection 270 at each end of the corresponding section, such that the projection 270 of one end of a section coincides with the projection 270 of one end of an adjacent section. Furthermore, when precasting, each of said projections 270 is formed with a through hole 290b in such a way that the through hole 290b of a projection 270 of one section coincides with the through hole 290b of a projection 270 of an adjacent section, in such a way such that passive bars are arranged one in each pair of mating through holes 290b to sew respective sections of octagonal outer ring 220a together.

In the present embodiment the octagonal inner ring sections 220b are not fastened to each other and the octagonal outer ring sections 220a are not fastened to the octagonal inner ring sections 220b. However, fastening of sections of the inner ring and fastening of sections of different concentric rings, both in the present embodiment and in any other, fall within the scope of the present invention.

Fastening both the ribs to the slab and the ribs to the pedestal, and even slab sections to each other, is achieved in the present embodiment with the fastening means described above, but the person skilled in the art will understand, in view of the teachings of the present specification, that each fastening, in the present embodiment or in any other, can be carried out, independently, either by passive bar(s), or by active post-tensioned bar(s), or by means of active post-tensioned cable(s), or by any other fastening means, according to the stress levels of each joint, even being able to use a combination of more than one fastening means in a same joint, if considered appropriate, without thereby departing from the scope of the present invention.

In any case, it should be understood that fastening entails that the parts fastened to each other are joined in such a way that they act in a monolithic manner.

As already indicated above, the horizontal surface of the first slab piece can be greater than that of the pedestal. In that case, one or more ribs can have a configuration such that they rest on the extension of the first slab piece that projects laterally from the pedestal. This achieves an effect similar to that achieved in the second embodiment described above, in that the weight of the rib is not supported by the fastening cables and/or bars, but by the rib resting on the extension of the first slab piece that protrudes laterally from the pedestal.

It is even possible to implement a combination in which the horizontal extension of the first slab piece is greater than that of the pedestal, so that the ribs rest on the extension of the first slab piece that protrudes laterally from the pedestal, and in addition the ribs have a foot that, when installed, rests on the ground.

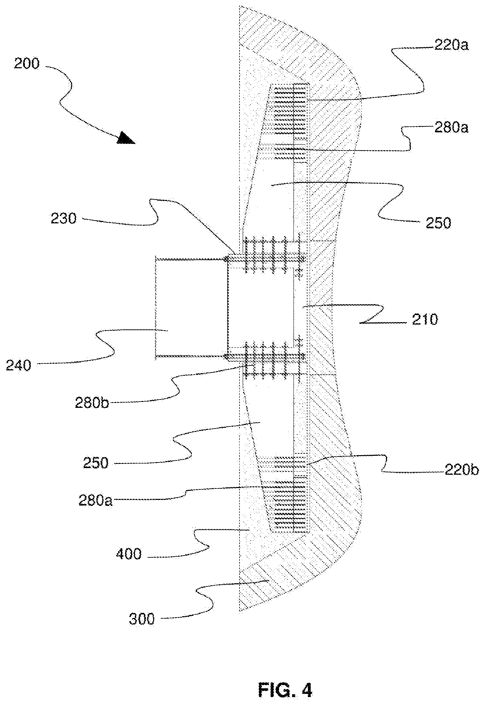

Referring specifically to figure 4 of the present embodiment, it can be seen that a terrain 300 has been excavated to produce a lowered terrain 400. The method for installing a foundation 200 according to the present embodiment includes:
i) excavating a certain terrain 300, producing a lowered terrain 400;
ii) arranging on said lowered terrain 400 the precast pedestal-first slab piece 230, 210 assembly in its installed position;
iii) arranging in said excavation 400 said second precast slab piece 220a, 220b, in its installed position;
iv) arranging the ribs 250, in their installed position;
v) fastening the ribs 250, on the one hand, to the second slab piece 220a, 220b and, on the other hand, to the pedestal 230 and/or to the first slab piece 210; and
vi) filling in said lowered terrain 400.

Typically, after an excavation is carried out and before a installing a foundation therein, a layer of low-quality concrete, called "cleaning concrete", is laid out to create a bed for the slab.

Naturally, the principle of the invention remaining the same, the embodiments and construction details can be varied widely with respect to what has been described and illustrated without thereby departing from the scope of the present invention.

Such variations may affect, for example, the shape, size and/or manufacturing materials.

For example, two embodiments of the present invention have been described in which, in one, the second slab piece is a circular crown and, in another, the second slab piece has an octagonal outer contour and a matching octagonal inner contour. However, said second slab piece can be any horizontal shape as long as the principle of the invention remains the same; for example, the second slab piece may have a hexagonal outer contour and a matching hexagonal inner contour, or any other polygonal contour, or the second slab piece may have a polygonal outer contour and a circular inner contour, or vice versa, and so on.

In addition, the second slab piece can be unitary or made up of sections, and in the latter case the divisions can have any configuration. For example, the second slab piece may be divided into two or more concentric rings, or it may be divided in the circumferential direction, or it may be divided with a combination of both forms of division.

In any case, terms such as "circumferential", "ring", "annular" or the like should not be understood as referring to a strictly circular shape, but simply to the fact that such a shape is a closed shape, except in those cases in which explicit reference is made to a specific shape.

## Claims

1. Entirely precast concrete foundation (100; 200) for a wind tower (140; 240), comprising a reinforced and/or prestressed concrete slab (110, 120; 210, 220a, 220b), a pedestal (130; 230) of reinforced and/or prestressed concrete and at least two ribs (150; 250) of reinforced and/or prestressed concrete, **characterized in that** the slab comprises a first piece (110; 210) and a second piece (120; 220a, 220b); **in that** the first slab piece (110; 210) and the pedestal (130; 230) are integral with each other; **in that** the second slab piece (120; 220a, 220b) is an annular piece that surrounds the first slab piece (110; 210); **in that** the first slab piece (110; 210) and the second slab piece (120; 220a, 220b) are spaced apart from one another; **in that** the ribs (150; 250) extend from the pedestal (130; 230) to the second slab piece (120; 220a, 220b); and **in that** the ribs (150; 250) are fastened, on the one hand, to the second slab piece (120; 220a, 220b) and, on the other hand, to the pedestal (130; 230) and/or to the first slab piece (110; 210).

2. Foundation according to claim 1, **characterized in that** the second slab piece (120) has the shape of an annular crown when viewed from above.

3. Foundation according to claim 1, **characterized in that** the second slab piece (220a, 220b) has a polygonal outer contour and a matching polygonal inner contour.

4. Foundation according to claim 3, **characterized in that** the second slab piece (220a, 220b) has an octagonal outer contour and a matching octagonal inner contour.

5. Foundation according to claim 1, **characterized in that** the second slab piece (220a, 220b) has a polygonal outer contour and an inner circular contour, or vice versa.

6. Foundation according to any one of the preceding claims, **characterized in that** the second slab piece is a single ring (120) or is divided into a plurality of concentric rings (220a, 220b).

7. Foundation according to claim 6, **characterized in that** at least one ring (120; 220a) of the second slab piece is unitary or is formed by a plurality of adjacent angular sections, circumferentially fastened to each other, and **in that** the ribs (150; 250) are fastened to said ring (120; 220a) which is unitary or is formed by a plurality of adjacent angular sections, circumferentially fastened to each other.

8. Foundation according to claim 4, **characterized in that** the second slab piece (220a, 220b) is divided into two concentric rings in such a way that it comprises an octagonal outer ring (220a) and an octagonal inner ring (220b), and **in that** said concentric rings (220a, 220b) are in turn divided into angular sections, the divisions coinciding with each apex of said concentric rings (220a, 220b), in such a way that the second slab piece (220a, 220b) is made up of 16 sections, the eight adjacent sections of the octagonal outer ring (220a) being circumferentially fastened to each other, the ribs (250) being fastened to the octagonal outer ring (220a).

9. Foundation according to claim 7 or 8, **characterized in that** the upper surface of each of the sections that are fastened to each other has a projection (270) at each end such that the projection (270) at one end of a section coincides with the projection (270) at one end of an adjacent section, and **in that** each of said projections (270) has a through hole (290b) such that the through hole (290b) of a projection (270) of one section coincides with the through hole (290b) of a projection (270) of an adjacent section, and **in that** fastening means are arranged on each pair of coincident through holes (290b), securing the respective sections together.

10. Foundation according to any one of the preceding claims, **characterized in that** each fastening is independently achieved either by means of passive bar(s), or post-tensioned active bar(s), or active post-tensioned cable(s), or a combination thereof.

11. Method for installing a foundation according to any one of the preceding claims, **characterized in that** it includes:
i) excavating a certain terrain (300), producing a lowered terrain (400);
ii) arranging on said lowered terrain (400) the precast pedestal-first slab piece (230, 210) assembly in its installed position;
iii) arranging in said excavation (400) said second precast slab piece (220a, 220b), in its installed position;
iv) arranging the ribs (250), in their installed position;
v) fastening the ribs (250), on the one hand, to the second slab piece (220a, 220b) and, on the other hand, to the pedestal (230) and/or to the first slab piece (210); and
vi) filling in said lowered terrain (400).

12. Method according to claim 11, **characterized in that**, after stage i) and before stage ii), a layer of low-quality concrete is placed that creates a bed for the slab.
